# EUROPEAN PATENT APPLICATION

(11) **EP 0 782 905 A2**
(43) Date of publication of application: **09.07.1997**
(21) Application number: 96309253.1
(22) Date of filing: 18.12.1996
(51) Int. Cl.: B25G 3/34, B21K 11/12, B21K 11/14, A01B 1/22, B21D 53/68

(54) **Hand tool with forged connector for securing tool portion to handle**

(30) Priority: 30.12.1995 GB 9526742
(71) Applicant: JAMES NEILL HOLDINGS LIMITED, Sheffield S13 9BR (GB)
(72) Inventor: Hibberd, George Henry, Sheffield 6 (GB)
(74) Representative: Houghton, David

(57) **Abstract**

The invention relates to hand tools, particularly garden tools, such as for example garden spades, garden forks and the like. Such tools are known to have a fully forged operative end with an integral socket for connection to a handle. They have high strength but are expensive and require high levels of operator skills in their manufacture. Fabricated constructions from pressings deduce noticeably costs of production but at the expense of strength. The object of the invention is to provide such hand tools that have both acceptable cost factors and acceptable levels of strength. The objective is met by a construction comprising a blade/prong portion (9,22), a separately formed and forged frog (1,13), said separately formed and forged frog (1,13) being suitably secured e.g. by welding, to the blade/prong portion (9,22) and to a separately formed socket (10,21) for connection to a handle.

## Description

This invention relates to hand tools and is particularly, but not necessarily exclusively, concerned with garden tools.

Garden tools such as, for example, garden spades, garden forks, hoes, trowels and the like, have historically been formed with the blade or prong portion as a forging with an integral connector for securing to a handle. Such fully forged constructions exhibit exceedingly high strength characteristics, but are expensive given the number of operations that are required, and high levels of operator skills. In an attempt to reduce the cost of such hand tools and the skill content of their production, it is known to fabricate the blade/prong part, as a pressing from plate material, and additionally known to provide an end part to the pressing to form a socket for connection to a handle. Whilst of considerably reduced cost in comparison with forged constructions, such fabricated constructions have very poor strength characteristics that leaves them only suited to light duty. Also known are constructions where a separate, generally T-shaped connector is provided suitably secured to one end of the blade/prong portion, and to serve as the connector for a handle. These constructions exhibit cost factors comparable with those of fabricated constructions, but like fabricated constructions have poor strength characteristics.

The object of the present invention is to provide hand tools, particularly garden tools, where cost factors and operator skill requirements are greatly reduced in comparison with fully forged constructions, but which exhibit strength characteristics that are an improvement over fully forged constructions thereby allowing a heavy duty usage.

According to the present invention, a hand tool comprises a blade/prong portion, a separately formed and forged frog, said separately formed and forged frog being suitably secured to the blade/prong portion and there being a handle suitably secured to the separately formed and forged frog.

The invention flows from the surprising recognition that the strength characteristics are predominantly as a result of the forged frog element of a fully forged construction, and that the blade and/or prong sectors of fully forged constructions play no significant part in their strength characteristics.

The recognition that only the frog needs to be forged has allowed the production of spades, shovels, forks and the like, where the blade or prong sectors can be produced by semi-automated equipment, such as pressings from sheet or strip steel, with a much reduced number of operations in comparison with forged blades and fork prongs. By a careful selection of material thickness, more than adequate strength characteristics in the blade/prong sector are provided, the manufacturing process and the sheet/strip nature of the material achieving major cost savings. Similar considerations apply to the connection of the separately formed and forged frog to a handle, where it is preferred to press and then form a socket member from sheet or steel strip, and secure the socket to the separately formed and forged frog by welding.

As to the forged frog itself its separate formation also allows semi-automated production, involving highly accurate press tools, with reduced operations and reduced operator skill requirements, leading to a reduction in costs, without any sacrifice of quality or strength.

The preferred manner of securing the separate forged frog to the blade/prong part is by welding, e.g., mig welding, a process that yet again can be semi-automated. It is an additional fabricating stage, as is the attachment of a handle socket to the frog by welding, but the added cost of semi-automatic welding does not outweigh the cost savings in the frog and in the blade/prong portions. Welding does not detract from the strength characteristics of forged constructions. On the contrary, welding creates a strength in the connection of forged frog to the blade/prong sector that is greater than the strength at the junction of the frog and blade/prong in an integral forged construction. The invention, in a most surprising manner, provides constructions with noticeable improvements in strength characteristics even in comparison with fully forged constructions.

According to a further feature of the invention, a process for the production of hand tools comprises forging a frog in a forging press, pressing blade/prong portions of the hand tool from plate or strip material, pressing and forming a socket from plate or strip material, assembling the socket on the frog, welding the socket to the frog, assembling the frog/socket assembly on a blade/prong portion, welding the frog to the blade/prong portion, and fitting a handle to the socket.

Preferably, the frog is forged with an integral locator, and the socket formed with a locating slot, to facilitate the fitting of the frog to the socket in its exact required position ready for welding. It is also preferred to forge the frog with additional locators and to press the blade/prong portions with co-operating locators, for the same purpose of allowing the accurate fitting of the frog to the blade/prong portions in readiness for welding.

The invention not only achieves higher strength characteristics with lower costs, it also enables a considerable improvement in the consistency of production of high quality, high strength products. Even with highly skilled operatives, fully forging has an inevitable and unavoidable level of inconsistency between the number of products produced by the same and by different skilled operatives.

Two examples of a separate forged frog suited for hand tools will now be described with reference to the accompanying drawings in which:-
Figure 1 is a side elevation of a first embodiment of a frog in accordance with the invention suitable for a spade or a shovel;
Figure 2 is a plan view of the frog of Figure 1;
Figure 3 is an end elevation of the frog of Figure 1;
Figure 4 is a section on the line IV-IV of Figure 1;
Figure 5 is a side elevation of a second embodiment of a frog in accordance with the invention suitable for use with forks;
Figure 6 is a plan view of the frog of Figure 5; and
Figure 7 is a section on the line VII-VII of Figure 5.

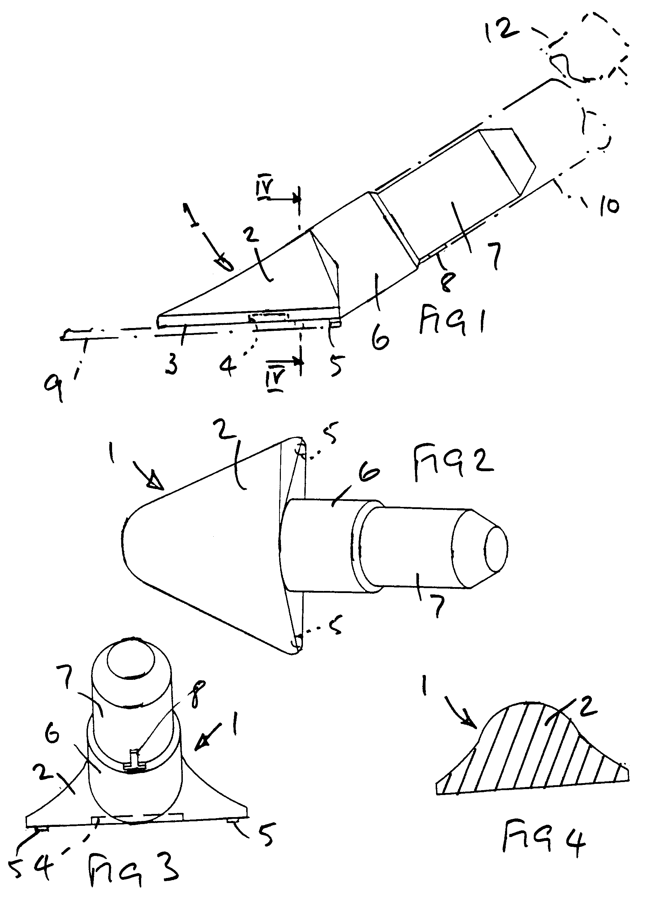

The frogs 1 and 13 respectively of Figures 1 and 5 are each formed by taking a round billet of an appropriate diameter of for example, a 0.4% carbon steel, and heated to approximately 1000°C in a gas fire furnace. The heated billet is then placed in the first of three separate tools located in a single tooling bolster, and the bolster mounted in a 350 tonne forging press. The billet is subjected to three stages in the press, first to rough forge then to finish forge and finally to clip the produced forging. The arrangement can be that the forgings are ejected semi-automatically while scrap is removed manually. The frogs, so forged, are then shotblasted in readiness for the next operations.

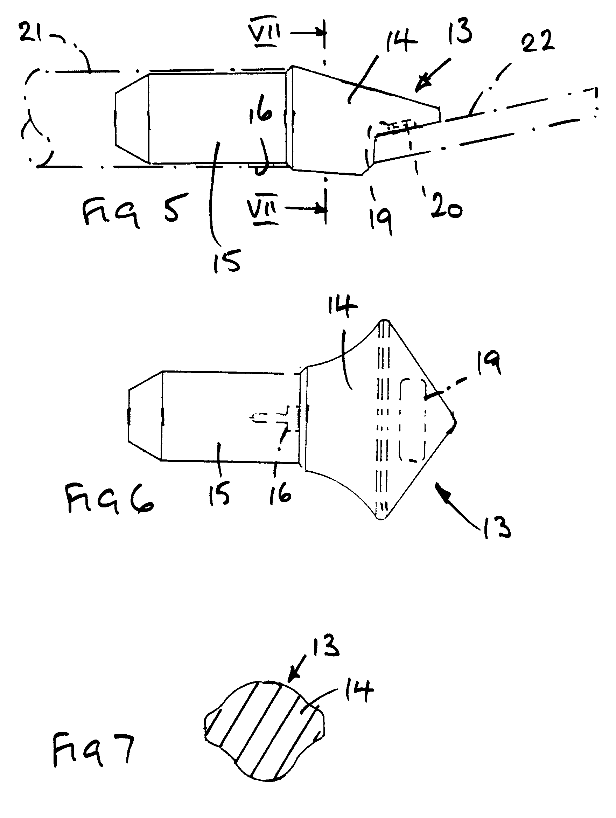

As is illustrated in Figures 1 to 4, a frog 1 suited for use with a spade or a shovel and produced by forging as has generally been referred to above, is formed with a body part 2 having a flat under surface 3 formed with a locating recess 4 and locating pegs 5. Integral with the body part 2 is an angled boss 6 from which extends an integral spigot 7, the spigot being provided with a generally T-shaped locating member 8.

As is indicated in Figure 1, the forged frog 1 is located on a shovel or spade blade 9 and its spigot 7 is positioned in a socket member 10. With the shovel or spade blade 9, an appropriate grade of steel may be provided in coil form that is first fed through a de-coiler/leveller and then to a press tool mounted in, e.g., a 250 tonne power press. The press tool blanks the blade shape inclusive of recesses and projections to fit the recesses 4 and locating pegs 5 on the forged frog. For the socket 10, an appropriate grade of steel, again supplied in coil form is similarly fed through a de-coiler/leveller to a press tool in, e.g., a 250 tonne power press. Once the socket blank has been produced, it is transferred to a three or four stage form tool mounted in the press first to produce a blank of U-shape form then to round up the blank to the shape of the socket with the edges of the blank in contact for form a seam, and there being produced a slot in the end of the socket at the position of the seam to engage with the locating member 8 on the boss of the forged frog. The socket is then cranked to provide opposite end sectors 11, 12 with offset axes as are required to properly locate a handle fitted to the socket in relation to the blade. If necessary, a fourth stage in the press can be a required reduction in the diameter of the socket.

To secure the frog, it is first assembled with its spigot 7 fitted into the end sector 11 of the socket, with the locating member 8 on the spigot engaging in the co-operating slot formed in the socket. This assembly is then presented to an automatic welding machine which mig welds around the point of contact between the socket and the boss 6 and then welds along the socket seam for a required distance, e.g. 100 mm. The frog and socket assembly is then presented to the shovel/spade blade 9 with the recess 4 and pegs 5 engaging with co-operating projections and holes in the blade surface. This assembly is then clamped into an automatic welding machine which mig welds around the periphery of the frog.

As is illustrated in Figures 6 to 8, the frog 13, suitable for use with forks is formed by the identical process to that discussed above in relation to the frog 1, to provide a body part 14 with an integral spigot 15, the spigot being formed with a T-shaped locating member 16, and the body part having a recess 17 with an angled longitudinal surface 18 in which is formed a recess 19 and locating peg 20.

The spigot 15 is fitted in a socket 21 formed in identical manner to the socket 10 of Figure 1, and as has been described above, and the forged frog is fitted to a fork tine member 22, the assembly of forged frog socket and tine member being produced and welded in substantially identical manner to the forged frog socket and shovel/spade blade as is described above in relation to Figure 1 to 4.

Of independent significance is the manner of production of the fork tine. Here, steel of an appropriate grade is provided in the form of rectangular plates, which plates are heated to, e.g., approximately 1000°C, e.g., in an electric induction heater. The hot plates can be transferred to an appropriate press tool mounted such as a 350 tonne power press. The press tool is formed as to allow the blanking out of four longitudinal slots in a first stage and then three intermediary longitudinal slots in a second stage i.e., to form seven slots and create eight tines across the width of the plate. In a final stage, the tool allows the blanking of the fork points and simultaneously separates the plate into two individual forks. The essential advantage of this technique is that a plate of a size capable of allowing the simultaneous production of two fork tines employs noticeably less metal than the two plates that have hitherto been required each for the production of one tine. This method of fork tine manufacture reduces considerably the amount of scrap metal involved and hence constitutes a most efficient manner of producing fork tines. The fork tines are simultaneously produced with a projection and recess to engage with the recess and projection 19, 20 on the surface 18 of the forged frog on the assembly of the tine member on the frog.

By employing shovel/spade blades and fork tines formed by pressings from coiled strip or from plate, along with pressed and formed sockets assembled into a complete article as a welded fabrication, much of the costs effectiveness of fabricated constructions as are known in the art is retained. However, as a direct consequence of the employment of a forged frog welded at one end to a shovel/spade blade or fork tine and at the other end to a socket, surprisingly high strength characteristics are provided in comparison with prior art fabricated and prior art pressed constructions approaching those of known fully forged shovels, spades and forks. To test the effectiveness of shovels/spades and forks made in accordance with the invention, comparative testing was effected, where the test technique was to locate the shovel/spade blade or fork tine in a fixed clamp and such that the shovel/spade or fork handle was in a generally horizontal disposition, and to apply to the free end of the handle of the shovel/spade or fork a fixed load of 55 Kg and secondly a progressively increasing load until such time as failure occurred. The results of these tests are shown in the tabulation below.

| **Product** | **Set at BS Load (55Kg)** | **Failure Load** |
|---|---|---|
| Forged Digging Spade | 3mm | 124kg |
| Forged Digging Fork | 0mm | 130kg |
| Fabricated Stainless Digging Spade | 9mm | 92kg |
| Fabricated Stainless Digging Fork | 9mm | 89kg |
| Fabricated Carbon Steel Digging Spade | 10mm | 95kg |
| Fabricated Carbon Steel Digging Fork | 0mm | 100kg |
| Digging Spade (with forged frog) | 5mm | 105kg |
| Digging Fork (with forged frog) | 5mm | 105kg |

By "Set" is meant the permanent deformation of the connection of the socket to the blade/tine. Here it will be seen that the set occasioned the spade and fork in accordance with the invention compares most favourably with the convention fully forged and fabricated spades and forks. The loading on the end of the handle that caused failure of spades and forks in accordance with the invention are shown to be noticeably higher than the failure loads of fabricated constructions, and whilst lower than the loads required to cause the failure of fully forged constructions strength characteristics were exhibited that were more than adequate to enable the spades and forks to serve there intended purposes. The net result of the invention is therefore the provision of shovels/spades forks with strength characteristics better than those of fabricated constructions with cost factors lower than those of fully forged constructions, and with a substantial elimination of a need to rely on skilled labour whilst at the same time facilitating the substantial elimination of the variables inherent in fully forged constructions.

## Claims

1. A hand tool comprising a blade/prong portion and a handle characterised by a separately formed and forged frog (1,13), said separately formed and forged frog being suitably secured to the blade/prong portion (9,22) and the handle being suitably secured to the separately formed and forged frog.

2. A hand tool as in Claim 1 characterised by a blade/prong portion (9,22) formed by pressing from coiled strip or sheet metal.

3. A hand tool as in Claim 1 or Claim 2 characterised by a pressed and formed socket (12,21) suitably secured to the separately formed and forged frog, said handle being attached to said socket.

4. A hand tool as in any of Claims 1 to 3 characterised in that the separately formed and forged frog (1,13) is secured to the blade/prong portion (9,22) by welding.

5. A hand tool as in any one of Claims 1 to 4 characterised in that the pressed and formed socket (12,21) is secured to the separately formed and forged frog (1,13) by welding.

6. A process for the production of hand tools characterised by forging a frog (1,13) in a forging press, pressing blade/prong sections (9,22) of the hand tool from plate or strip material, pressing a socket (12,21) from plate or strip material, assembling the socket on the frog, welding the socket to the frog, assembly the frog/socket assembly on a blade/prong portion welding the frog to the blade/prong portion and fitting handle to the socket.

7. A process as in Claim 6 characterised in that the frog (1,13) is forged with an integral locator (8,16), and the socket (12,21) formed with a co-operating locating slot to facilitate the fitting of the frog to the socket in its exact required position ready for welding.

8. A process as claimed in Claim 6 and 7 characterised in that the frog (1,13) is forged with additional locators (4,5,19,20), and the blade/prong portion pressed with co-operating locating projections and slots for the purpose of allowing the accurate fitting of the frog to the blade/prong portion in readiness for welding.

9. A process for the production of hand tools characterised in that to form a prong portion (22), rectangular plate material is heated, the hot plate is transferred to a press tool mounted in a power press, four elongate slots are first pressed in the plate in a first pressing stage followed by the pressing of three intermediary slots in a second pressing stage, the seven slots being for the purpose of creating eight tines, following which the plate is subjected to further pressing to blank the fork points on four tines at one end of the slots and four points on four tines to the opposite end of the slots with simultaneous separation of the forks into two individual forks.

10. A process as in Claim 9 characterised in that the individual forks are coined to generate fork points of a required shape.
